# EUROPEAN PATENT SPECIFICATION

(11) **EP 1 416 188 B1**
(45) Date of publication and mention of the grant of the patent: **28.06.2006**
(21) Application number: 03025055.9
(22) Date of filing: 30.10.2003
(51) Int. Cl.: F16F 9/348

(54) **Damping force generating mechanism for a hydraulic shock absorber**
Dämpfungskraft erzeugende Vorrichtung für einen hydraulischen Stossdämpfer
Dispositif générant force d'amortissement pour un amortisseur hydraulique

(30) Priority: 31.10.2002 JP 2002318081
(43) Date of publication of application: 06.05.2004
(73) Proprietor: KAYABA INDUSTRY CO., LTD., Minato-Ku, Tokyo (JP)
(72) Inventor: Yonezawa, Kazuhiko, Kayaba Industry Co. Ltd,, Minato-ku Tokyo (JP)
(74) Representative: Grünecker, Kinkeldey, Stockmair & Schwanhäusser Anwaltssozietät

(56) References cited:
- EP-A- 0 807 767
- DE-B- 1 300 364
- GB-A- 2 157 808
- US-A- 4 485 900
- US-A- 5 085 300

## Description

### FIELD OF THE INVENTION

The present invention relates to a damping force generating mechanism of a hydraulic shock absorber according to the preamble of claim 1, which is used in a suspension apparatus of a vehicle, such as an automobile.

### BACKGROUND OF THE INVENTION

A shock absorber used in a suspension apparatus of a vehicle, such as an automobile, is configured to generate an optimal damping force in an expansion and contraction stroke in order to suitably relieve vibrations that are transmitted to a vehicle body from a road surface during travel, increasing ride comfort and stability. A damping force generating mechanism of the above type is, for example, known from US-A-5,085,330 or US 4,485,900.

A hydraulic shock absorber cited in JP 2001-20991 A, issued by the Japan Patent Office in 2001, is provided with: a pressure side damping force generating valve, which is provided in a rod chamber side surface of a piston portion, and which is seated so as to be capable of opening and closing a pressure side port drilled in the piston portion; and an extension side damping force generating valve that is provided in a piston chamber side surface, and that is seated capable of opening and closing an extension side port formed in the piston portion.

The pressure side damping force generating valve and the extension side damping force generating valve are structured by stacking a plurality of thin disk shaped damping force generating leaf valves. The pressure side damping force generating valve is fixed to an inner circumferential side by a pressure side spacer, and a valve stopper, which are disposed in a piston rod side. Further, the extension side damping force generating valve is fixed to the inner circumferential side by an extension side spacer, a valve stopper, and a nut, which are disposed in a piston chamber side.

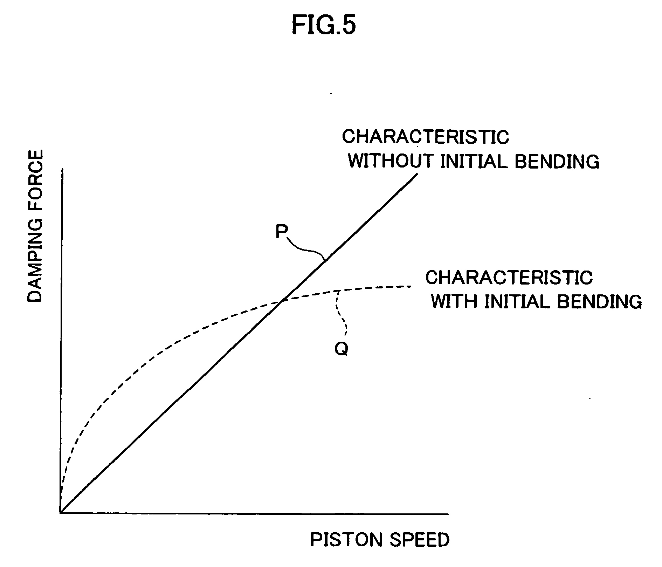

As shown by a straight line P in FIG. 5, a relationship between a moving speed of the piston and the damping force generated at that time is substantially linear with this type of damping force generating structure. However, the damping force when the piston moves at high speed should be lowered as shown by a curve Q in order to increase steering stability and ride comfort of the automobile.

In order to achieve these types of damping force characteristics, such a structure has been employed recently that an initial load is imparted toward ports in the pressure side damping force generating valve or in the extension side damping force generating valve.

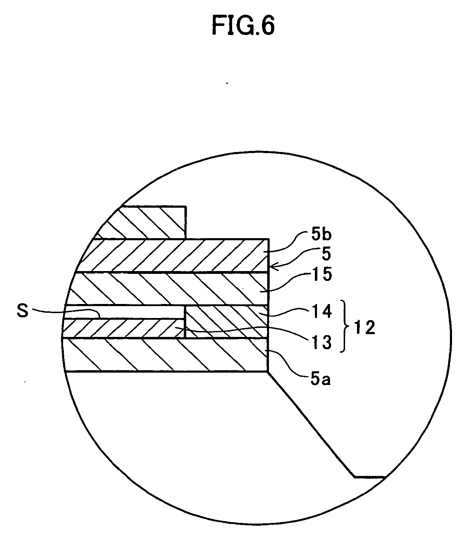

As shown in FIG. 6, for example, a pressure side damping force generating valve 5 is constructed by overlapping a plurality of leaf valves 5a, 5b, 12, and 15. The second leaf valve 12 is stacked on an upper surface of the leaf valve 5a, which is seated in a pressure side port. A thin inner circumference valve 13, and a thick outer circumference valve 14 that is disposed in an outer circumference of the thin inner circumference valve 13, structure the second leaf valve 12. A gap S is formed between the inner circumference valve 13, and the third leaf valve 15 that is stacked on the upper surface of the inner circumference valve 13, and the gap S corresponds to the difference in thickness between the valves 13 and 14.

Each of the leaf valves 5a, 5b, 12, and 15 is placed in a compressed state by using this type of structure. An inner circumferential side of the third leaf valve 15, and an inner circumferential side of the leaf valve 5b that is stacked on an upper surface of the third leaf valve 15, bend toward the compression side port side in accordance with the gap S.

An initial load thus develops in the pressure side damping force generating valve, toward the compression port. The relationship between the piston speed and the generated damping force becomes that shown by the curve Q in FIG. 5.

However, problems such as the following are present with the structure described above where an initial load is imparted.

That is, the thin inner circumference valve 13 and the thick outer circumference valve 14 disposed in the outer periphery of the thin inner circumference valve 13 structure the second leaf valve 12. Two parts are therefore used, which means an increase in the number of parts, and manufacturing costs and assembly costs increase.

In particular, if positioning of the thin inner circumference valve 13 and the thick outer circumference valve 14 is not performed accurately during their assembly, assembly failures will develop where the outer circumference valve 14 rides up on the inner circumference valve 13. The assembly process must therefore be performed carefully, and the manufacturing costs and assembly costs increase.

### SUMMARY OF THE INVENTION

An object of the present invention is therefore to provide a damping force generating mechanism of a hydraulic shock absorber, in which the number of parts is decreased, assembly characteristics are improved, and in addition, assembly costs are reduced.

In order to achieve the above object, this invention provides the damping force generating mechanism of a hydraulic shock absorber according to claim 1.

The details as well as other features and advantages of this invention are set forth in the remainder of the specification and are shown in the accompanying drawings.

### BRIEF DESCRIPTION OF THE DRAWINGS

FIG. 1 is a cross sectional diagram that shows a piston portion of an embodiment of the present invention.

FIG. 2 is a blown up cross sectional diagram of a portion of the piston portion shown in FIG. 1.

FIG. 3 is a perspective view of a damping force generating valve that shows an embodiment of the present invention.

FIG. 4 is a perspective view that shows a valve body and a ring that structure the damping force generating valve of FIG. 3.

FIG. 5 is a diagram that shows a relationship between piston speed and generated damping force in a conventional hydraulic shock absorber.

FIG. 6 is a blown up cross sectional diagram of a portion of a conventional piston portion.

### DESCRIPTION OF THE PREFERRED EMBODIMENTS

Embodiments of the present invention are explained below based on the accompanying drawings.

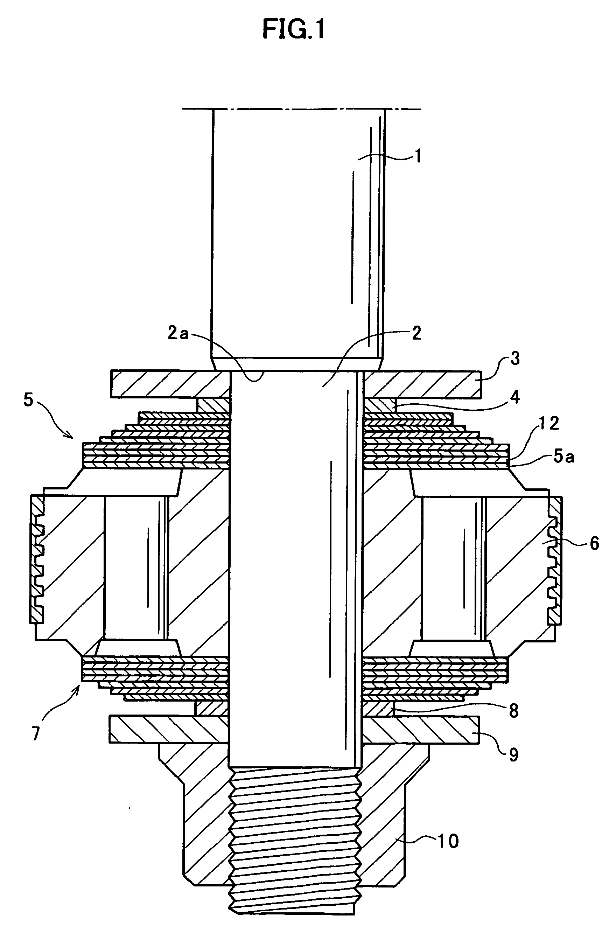

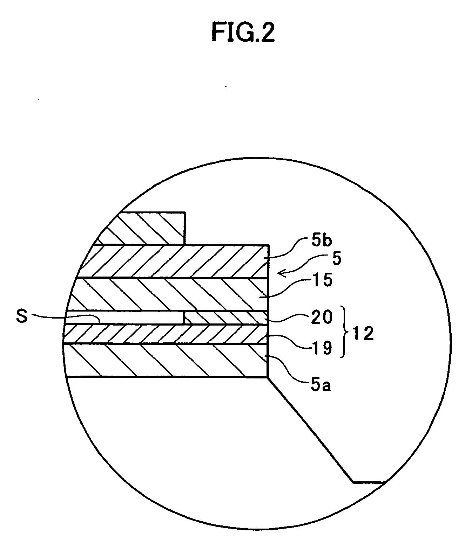

Referring to FIG. 1 and FIG. 2, a pressure side valve stopper 3, a spacer 4, a pressure side damping force generating valve 5 made from a plurality of leaf valves, a piston portion 6, an extension side damping force generating valve 7, a spacer 8, and an extension side valve stopper 9 are stacked in order on a spigot portion 2 of a piston rod 1. In addition, a nut 10 is screwed on from below the valve stopper 9. Each of the members described above is thus fixed with an applied compressive load between a base end portion 2a of the spigot portion 2, and the nut 10.

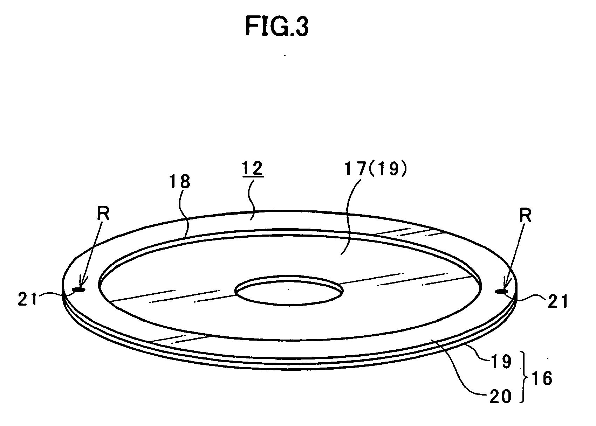

Referring to FIG. 3, a second leaf valve 12 is structured by a ring shaped thick portion 16 that is provided in an outermost circumferential portion, and a disk shaped thin portion 17 that is provided in a more inner circumferential side than the thick portion 16. A step portion 18 is formed between the thick portion 16 and the thin portion 17. Further, the thickness of the thick portion 16 and the thickness of the thin portion 17 are both constant.

The most characteristic feature of the present invention is that the thin portion 17 is provided by a disk shaped valve main body 19, and that the thick portion 16 is provided by the valve main body 19 and a ring shaped outside ring 20 which is fixed to the valve main body 19 by welding. Overall, this is one part. The outside ring 20 is fixed to the valve main body 19 at two opposite locations (points R in FIG. 3) by electric resistance welding. The outside ring 20 functions as an initial load generating portion.

The second leaf valve 12 can therefore be attached without work for assembling two separate parts, as with the conventional valve example.

Electric resistance welding is explained here. This type of welding is one in which voltage is applied to a welding material by electrodes, and a large amount of current flows in a short period of time in an electric pathway formed by this applied voltage. Resistance heating takes place, and the welding material is melted and fixed in place. The valve main body 19 and the outside ring 20 are fixed in this embodiment by welding, with joining surfaces of the valve main body 19 and the outside ring 20 used as the welding material.

A method of manufacturing the second leaf valve 12 by using electric resistance welding is explained next.

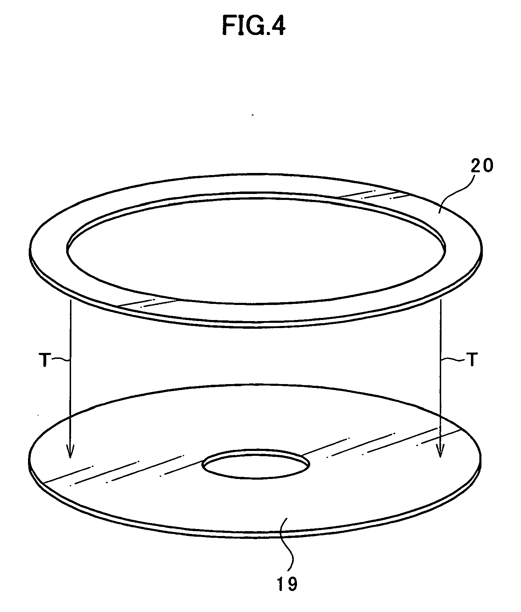

Referring to FIG. 4, first the disk shaped valve main body 19 and the outside ring 20 are provided as separate members having identical diameters. The outside ring 20 is then placed on an upper surface of the valve main body 19, as shown by arrows T, with the centers of the valve main body 19 and the outside ring 20 made to coincide.

Referring to FIG. 3, voltage is applied next to the two opposite locations (the points R of FIG. 3) by electrodes (not shown), causing a large amount of current to flow in a short amount of time, and causing resistance heating. The joining surfaces of the valve main body 19 and the outside ring 20 melt, and are fixed. The electrodes are disposed in a center portion in a width direction of the outside ring 20 in this embodiment. Welding current, electrode welding force, and a diameter size of an electrode tip are regulated in order to make depressed portions 21, which develop during welding, impart no influence to the step portion 18, and in order to contain spatters, which are generated during welding, within the depressed portions 21.

The following effects are obtained in accordance with the embodiment described above.

The second leaf valve 12 can be made into a single part, and therefore the number of parts can be reduced when compared with conventional damping force generating valves.

With conventional leaf valves, the thick outer circumference valve may ride up on the thin inner circumference valve during assembly, resulting in assembly failures, during assembly of the outer circumference valve in the outer periphery of the inner circumference valve if positioning is not performed accurately. The assembly work must therefore be performed carefully, and it is difficult to shorten the amount of time needed for assembly. This problem does not develop with this embodiment, however, and the assembly time can be shortened. In addition, the assembly costs can also be reduced.

Further, welding sites for the outside ring 20 and the valve main body 19 are at two opposite locations, and therefore the welding time can be shortened, and the influence of heat when welding the outside ring 20 and the valve main body 19 can be reduced.

In addition, the welding sites for the outside ring 20 and the valve main body 19 are the center portions in the width direction of the outside ring 20. Therefore the depressed portions 21, which are formed by welding, can be dependably prevented from changing the shape of an inner circumferential edge portion, or an outer circumferential edge portion of the outside ring 20, and imparting any influence on the basic functionality of the valve.

Furthermore, the welding current, the electrode welding force, and the diameter size of the electrode tip are regulated to keep spatters generated during welding within the depressed portions 21. Spatters can therefore be prevented from adhering to surface portions of the outside ring 20 other than the depressed portions 21. The basic functionality of the valve can therefore be ensured.

Further, the step portion 18 is formed between the thin portion 17 and the thick portion 16, and therefore the size of the gap S formed by the step portion 18 are easy to manage.

Note that the present invention is not limited to the embodiment described above. The following changes may be made, for example.

1) It is explained in the embodiment described above that the thickness of the thick portion 16 and the thickness of the thin portion 17 are both uniform. This is not always necessary, however. An inclined surface where the thickness becomes gradually thinner toward the inner circumference side from the outer circumference side may also be used.

2) The thick portion 16 is provided in the outermost circumference in the embodiment described above, but it is not always necessary to provide the thick portion 16 in the outermost circumference. For example, the thick portion 16 may also be provided in an intermediate portion between the outermost circumference and an innermost circumference. The position may be changed arbitrarily according to the initial load generated.

3) The initial load generating portion is provided only in the upper side of the damping force generating valve in the embodiment described above. The initial load generating portion naturally may also be provided in a lower side of the damping force generating valve, and further, may also be provided in both sides.

4) The ring shaped outside ring 20 is used as the initial load generating portion in the embodiment described above.

5) Welding using electric resistance welding is performed at two locations in the embodiment described above, but it is not always necessary that welding be performed at two locations. Four locations, six locations, and the like may also be employed, and the number of locations may be suitably changed.

## Claims

1. A damping force generating mechanism for a hydraulic shock absorber, comprising:
a piston portion (6) placeable in the hydraulic shock absorber;
an extension side port and a pressure side port drilled in the piston portion (6);
an extension side damping force generating valve (7) comprising a plurality of extension side leaf valves which are disposed adjacent to the piston portion (6) in a stacked state, each of which has a fixed inner circumferential side, and which seat the extension side port; and
a pressure side damping force generating valve (5) comprising a plurality of compression side leaf valves which are disposed adjacent to the piston portion (6) in a stacked state, each of which has a fixed inner circumferential side and which seat the pressure side port;
wherein at least one leaf valve in the extension side damping force generating valve (7) and at least one leaf valve in the pressure side damping force generating valve (5) each comprise:
a thin sheet valve body (19); and
a thick portion (16) which is formed along a circumferential direction in an intermediate portion of the thin sheet valve body (19), or in an outer edge side of the thin sheet valve body (19), and which contacts an adjacent leaf valve, **characterized by**
the thick portion (16) being formed by a ring (20) that is electric resistance welded to the thin sheet valve body (19),
the ring (20) being electric resistance welded to the thin sheet valve body (19) at a center of the ring (20) in a width direction.

2. The damping force generating mechanism of a hydraulic shock absorber as defined in claim 1, wherein the ring that forms the thick portion is disposed in at least one side of the thin sheet valve body (19) .

3. The damping force generating mechanism of a hydraulic shock absorber as defined in claim 2, wherein the ring (20) is fixed at two opposing locations in a radial direction with respect to the thin sheet valve body (19).

## Patentansprüche

1. Dämpfkraft-Erzeugungsmechanismus für einen hydraulischen Stoßdämpfer, der umfasst:
einen Kolbenabschnitt (6), der in dem hydraulischen Stoßdämpfer angeordnet werden kann,
eine Zugseiten-Öffnung und eine Druckseiten-Öffnung, die in den Kolbenabschnitt (6) gebohrt sind;
ein Zugseiten-Dämpfkraft-Erzeugungsventil (7), das eine Vielzahl von Zugseiten-Membranventilen umfasst, die in einem übereinander geschichteten Zustand an den Kolbenabschnitt (6) angrenzend angeordnet sind und von denen jedes eine feste Innenumfangsseite hat und die die Zugseiten-Öffnung aufnehmen; und ein Druckseiten-Dämpfkraft-Erzeugungsventil (5), das eine Vielzahl von Druckseiten-Membranventilen umfasst, die in einem übereinander geschichteten Zustand an den Kolbenabschnitt (6) angrenzend angeordnet sind und von denen jedes eine feste Innenumfangsseite hat und die die Druckseiten-Öffnung aufnehmen;
wobei wenigstens ein Membranventil in dem Zugseiten-Dämpfkraft-Erzeugungsventil (7) und wenigstens ein Membranventil in dem Druckseiten-Dämpfkraft-Erzeugungsventil (5) jeweils umfassen:
einen Dünnblech-Ventilkörper (19); und
einen dicken Abschnitt (16), der in einer Umfangsrichtung an einem Mittelabschnitt des Dünnblech-Ventilkörpers (19) oder an einer Außenrandseite des Dünnblech-Ventilkörpers (19) ausgebildet ist und der mit einem angrenzenden Membranventil in Kontakt ist, **dadurch gekennzeichnet, dass**:
der dicke Abschnitt (16) durch einen Ring (20) gebildet wird, der durch Widerstandsschweißen an dem Dünnblech-Ventilkörper (19) angebracht wird,
der Ring (20) in einer Mitte des Rings (20) in einer Breitenrichtung durch Widerstandsschweißen an dem Dünnblech-Ventilkörper (19) angebracht wird.

2. Dämpfkraft-Erzeugungsmechanismus eines hydraulischen Stoßdämpfers nach Anspruch 1, wobei der Ring, der den dicken Abschnitt bildet, an wenigstens einer Seite des Dünnblech-Ventilkörpers (19) angeordnet ist.

3. Dämpfkraft-Erzeugungsmechanismus eines hydraulischen Stoßdämpfers nach Anspruch 2, wobei der Ring, (20) an zwei in Bezug auf den Dünnblech-Ventilkörper (19) einander gegenüberliegenden Positionen in einer radialen Richtung befestigt ist.

## Revendications

1. Mécanisme générateur de force d'amortissement destiné à un amortisseur hydraulique, comprenant :
une partie de piston (6) pouvant être placée dans l'amortisseur hydraulique ;
un orifice du côté de l'extension et un orifice du côté de la pression percés dans la partie de piston (6)
un clapet générateur de force d'amortissement du côté de l'extension (7) comprenant une pluralité de clapets à lamelle du côté de l'extension qui sont disposés à proximité de la partie de piston (6) dans un état d'empilement, dont chacun a un côté de circonférence interne fixe, et qui reçoit l'orifice du côté de l'extension ; et
un clapet générateur de force d'amortissement du côté pression (5) comprenant une pluralité de clapets à lamelle du côté de la compression qui sont disposés à proximité de la partie de piston (6) dans un état d'empilage, dont chacun a un côté de circonférence interne fixe, et qui reçoit l'orifice du côté de la pression ;
dans lequel au moins un clapet à lamelle situé dans le clapet générateur de force d'amortissement du côté de l'extension (7) et au moins un clapet à lamelle situé dans le clapet générateur de force d'amortissement du côté de la pression (5) comprennent chacun :
un corps de clapet à feuille mince (19) ; et
une partie épaisse (16) qui est formée le long d'une direction circonférentielle dans une partie intermédiaire du corps de clapet à feuille mince (19), ou dans un côté de bord externe du corps de clapet à feuille mince (19), et qui est en contact avec un clapet à lamelle adjacent, **caractérisé en ce que** :
la partie épaisse (16) est formée par une bague (20) qui est une résistance électrique soudée sur le corps de clapet à feuille mince (19) ;
la bague (20) est une résistance électrique soudée sur le corps de clapet à feuille mince (19) au centre de la bague (20) dans la direction de la largeur.

2. Mécanisme générateur de force d'amortissement destiné à un amortisseur hydraulique selon la revendication 1, dans lequel la bague qui forme la partie épaisse est disposée sur au moins un côté du corps de clapet à feuille mince (19).

3. Mécanisme générateur de force d'amortissement destiné à un amortisseur hydraulique selon la revendication 2, dans lequel la bague (20) est fixée en deux emplacements opposés dans une direction radiale par rapport au corps de clapet à feuille mince (19).
